(19) **Europäisches Patentamt / European Patent Office / Office européen des brevets**

(11) **EP 3 237 939 B1**

(12) **FASCICULE DE BREVET EUROPEEN**

(45) Date de publication et mention de la délivrance du brevet:
**18.03.2020 Bulletin 2020/12**

(21) Numéro de dépôt: **15825617.2**

(22) Date de dépôt: **18.12.2015**

(51) Int Cl.:
*G02B 1/115* (2015.01)     *G02B 1/116* (2015.01)
*G02B 5/26* (2006.01)     *G02B 5/28* (2006.01)
*G02C 7/10* (2006.01)

(86) Numéro de dépôt international:
**PCT/FR2015/053656**

(87) Numéro de publication internationale:
**WO 2016/102857 (30.06.2016 Gazette 2016/26)**

(54) **ARTICLE OPTIQUE COMPORTANT UN REVÊTEMENT INTERFÉRENTIEL À FORTE RÉFLEXION DANS LE DOMAINE DE L'ULTRAVIOLET**

OPTISCHER ARTIKEL MIT EINER INTERFERENZBESCHICHTUNG MIT HOHER REFLEKTIVITÄT IM ULTRAVIOLETTEN BEREICH

OPTICAL ARTICLE COMPRISING AN INTERFERENCE COATING WITH HIGH REFLECTIVITY IN THE ULTRAVIOLET REGION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.12.2014 FR 1463344**

(43) Date de publication de la demande:
**01.11.2017 Bulletin 2017/44**

(73) Titulaire: **Essilor International**
**94220 Charenton-le-Pont (FR)**

(72) Inventeurs:
• **PASSARD, Delphine**
**94227 Charenton le Pont cedex (FR)**
• **MAITRE, Nicolas**
**94227 Charenton le Pont cedex (FR)**

(74) Mandataire: **Jacobacci Coralis Harle**
**32, rue de l'Arcade**
**75008 Paris (FR)**

(56) Documents cités:
**EP-A2- 2 708 922      WO-A1-2013/171435**
**WO-A1-2014/057226      FR-A1- 2 990 774**
**US-A- 5 332 618      US-A1- 2013 293 950**

• **CITEK ET AL: "Anti-reflective coatings reflect ultraviolet radiation", OPTOMETRY - JOURNAL OF THE AMERICAN OPTOMETRIC ASSOCIATION, ELSEVIER, NL, vol. 79, no. 3, 24 février 2008 (2008-02-24), pages 143-148, XP022496911, ISSN: 1529-1839, DOI: 10.1016/J.OPTM.2007.08.019**

**Description**

Domaine technique de l'invention

La présente invention concerne d'une manière générale un article, notamment un article d'optique transparent, telle qu'une lentille ophtalmique, comprenant un empilement interférentiel permettant de diminuer la transmission des ultraviolets à travers une lentille ophtalmique.

Etat de la technique

Le spectre solaire se compose de radiations électromagnétiques de différentes longueurs d'onde, notamment le rayonnement ultraviolet (UV). Le spectre UV comporte plusieurs bandes, en particulier les bandes UVA, UVB et UVC. Parmi les bandes UV parvenant à la surface de la terre, la bande UVA, comprise entre 315 nm et 380 nm, et la bande UVB, comprise entre 280 nm et 315 nm, sont particulièrement nocives pour l'œil. Elles sont notamment responsables d'une accélération du vieillissement oculaire susceptible d'engendrer une cataracte précoce ou de phénomènes plus extrêmes comme la photokératite ou "cécité des neiges". On considère que la protection contre les UV n'est pas adéquate lorsque la lentille ophtalmique laisse passer plus de 1% de la longueur d'onde allant de 280 à 380 nm.

Or certains matériaux usuellement utilisés en tant que substrat de lentille ophtalmique, par exemple ceux obtenus par (co)polymérisation de bis allyl carbonate du diéthylèneglycol vendus, par exemple, sous la dénomination commerciale CR-39® par la société PPG Industries (lentilles ORMA® ESSILOR), laissent passer en partie les ultraviolets de 350 nm à 380 nm. Il a en effet été constaté que ce substrat laissait passer une partie des UV dans cette gamme de longueur d'onde.

Par conséquent, ces matériaux ne permettent pas de fournir une protection parfaite contre la lumière ultra violette nocive allant de 280 à 380 nm. Cela a pour conséquence d'entraîner deux problèmes majeurs, à savoir tout d'abord une faible valeur du facteur de protection solaire des verres ophtalmique « ESPF » (de l'anglais « Eye-Sun Protection Factor », tel que défini dans la demande de brevet européen EP2607884) de l'ordre de 10/15, puis une augmentation du jaunissement du substrat dû à sa dégradation par les UV au cours du temps.

Les revêtements antireflet conventionnels sont conçus et optimisés pour réduire la réflexion à la surface du verre dans le domaine visible, typiquement dans la gamme spectrale allant de 380 à 780 nm. En général, la réflexion dans le domaine UV (280-380 nm) n'est pas optimisée.

Afin de prévenir les dommages oculaires provoqués par ces rayons UV et obtenir une lentille présentant une coupure UV (la plus grande longueur d'onde pour laquelle la lentille coupe au moins 99% de la lumière UV) supérieure ou égale à 365 nm, généralement égale à 380 nm, différentes solutions ont été proposées dans l'art antérieur.

Une première solution consiste à diminuer la réflexion dans le spectre de l'UV en revêtant la face arrière d'un substrat de lentille d'un revêtement antireflet multicouche.

Le document FR 2968774 décrit par exemple un substrat de lentille comprenant sur sa face arrière un revêtement antireflet multicouche. Ce revêtement antireflet multicouche présente un facteur moyen de réflexion Ruv entre 280 et 380 nm pondéré par la fonction W($\lambda$) définie selon la norme ISO 13666 :1998, inférieur à 5%, pour un angle d'incidence de 30° et pour un angle d'incidence de 45°.

Par exemple, l'exemple 1 de ce document divulgue l'emploi d'un revêtement antireflet comprenant, en partant du substrat, un empilement de 4 couches de haut ($ZrO_2$) à bas ($SiO_2$) indice de réfraction. Le facteur de réflexion dans l'UV de cet exemple à un angle d'incidence de 35° est : $R_{UV}^{35°}(\%) = 4\,\%.$ Le revêtement testé selon cet exemple permet en outre d'obtenir un facteur de protection solaire ESPF allant de 11 à 25 en fonction du substrat testé comme le montre le tableau 1 ci-dessous :

*Tableau 1* : Valeur ESPF de l'empilement de l'exemple 1 en fonction des substrats

| Substrat | Orma® 15 | Orma® thin | PC | MR7® | MR8® |
|---|---|---|---|---|---|
| $T_{UV}^{0°}(\%)$ | 3.87% | 5.26% | 0 | 0 | 0 |
| ESPF - valeur et classe | 13 Classe 10 | 11 Classe 10 | 25 Classe 25 | 25 Classe 25 | 25 Classe 25 |

Ce tableau montre ainsi que les valeurs ESPF sont plus faibles sur les lentilles Orma® à base de bis allyl carbonate du diéthylèneglycol que sur les autres substrats, ce qui confirme que les substrats Orma® transmettent l'UV entre 350 nm et 380 nm. La valeur ESPF est encore plus faible pour le substrat Orma thin® qui présente une épaisseur centre plus faible et qui donc laisse passer encore plus les rayons UV nocifs.

Par conséquent, en fonction des substrats, la lentille ophtalmique décrite dans le document FR 2968774 ne présente pas un facteur de protection solaire suffisant.

Une autre solution afin d'obtenir une lentille ophtalmique qui coupe les UV est de diminuer la transmission dans l'UV $(T_{UV}^{0°}(\%))$ en intégrant par exemple des absorbeurs UV dans les lentilles ophtalmiques.

L'absorbeur UV peut être incorporé dans la masse de la lentille, lors de la polymérisation des monomères formant le matériau de la lentille, ou en surface de celle-ci, par immersion de la lentille (ou imbibition) dans un bain contenant l'absorbeur UV.

L'incorporation d'un absorbeur UV dans la lentille s'accompagne généralement d'un jaunissement indésirable de celle-ci, auquel on peut remédier en associant l'absorbeur UV à un colorant spécifique.

La demande EP 1 085 348 divulgue un procédé d'incorporation d'un absorbeur UV dans une lentille sans entraîner de jaunissement de cette dernière. Ce procédé consiste à mélanger un absorbeur UV à base de benzotriazole, avec un monomère de type épisulfure ou diéthylèneglycol bis(allyl carbonate) qui est ensuite polymérisé pour former le matériau de la lentille. L'utilisation de cet absorbeur UV spécifique dans ce procédé particulier permet une absorption des UV longs.

En outre, il a été suggéré dans la demande JP01-230003, un procédé d'imbibition d'une lentille à l'aide d'un autre dérivé de benzotriazole, le 2-(2-hydroxy-5-méthylphényl) benzotriazole.

Cependant, ces solutions utilisant des absorbeurs UV, bien que satisfaisantes, mettent en œuvre un procédé assez complexe.

Une autre solution connue dans l'état de la technique pour diminuer la transmission $T_{UV}^{0°}(\%)$ consiste à revêtir la substrat d'un empilement antireflet réjecteur de rayons ultraviolet.

Le document US 5,332,618 décrit par exemple un revêtement antireflet multicouches réjecteur d'UV pouvant être disposé sur un subtrat transparent (verre minéral). Le revêtement comprend au moins huit couches. Il est constitué alternativement à partir du substrat, d'une couche de haut indice de réfraction (indice de réfraction supérieur ou égal à 2,10 pour une longueur d'onde de 520 nm) et d'une couche à bas indice de réfraction (indice de réfraction de moins de 1,50 pour une longueur d'onde de 520 nm). En particulier, un ensemble de cinq couches successives présentent une épaisseur de ¼ de longueur d'onde chacune, cet ensemble est entouré par les deux couches à bas indice de réfraction présentant chacune une épaisseur de 1/8 de longueur d'onde à une longueur d'onde de 330 nm. Il est indiqué que la réflexion des UV est amélioré par les contraintes d'épaisseur de ces deux couches à bas indice de réfraction.

L'exemple 3 de ce document illustre un revêtement comprenant une alternance de huit couches à haut indice de réfraction en $TiO_2$ et de bas indice de réfraction en $SiO_2$. L'article optique selon cet exemple, qui a été reproduit par la Demanderesse, présente un facteur de réflexion à 400 nm de 46% à un angle d'incidence de 0° et un facteur de réflexion dans l'UV de 86% pour une gamme de longueur d'onde allant de 350 à 380 nm. Par conséquent, le revêtement selon cet exemple a pour effet de couper la lumière visible dans le bleu entraînant un jaunissement indésirable de l'article optique.

Ce document divulgue qu'en outre une couche de haut indice de réfraction en zircone ($ZrO_2$) n'est pas recommandée car elle conduirait à des revêtements moins efficaces et/ou plus complexes.

Par conséquent, bien que ces solutions soient satisfaisantes, il existe toujours un besoin pour de nouveaux articles optiques, tels que des lentilles ophtalmiques présentant des propriétés anti-UV améliorées, tout en possédant de très bonnes performances antireflet dans le domaine du visible et dont la mise en œuvre est simple.

Par ailleurs, les substrats à base de polycarbonate filtrent au moins 99% de la lumière pour les longueurs d'ondes inférieures à 385 nm, tandis que les substrats en poly(thiouréthanes) filtrent au moins 99% de la lumière pour les longueurs d'ondes inférieures 395-398 nm. Dans cette gamme de lumière visible violette de 380 nm à 400 nm, il peut être aussi avantageux de limiter la transmission à travers les lentilles ophtalmiques.

La présente invention a ainsi pour but de proposer un nouvel article optique, en particulier une lentille ophtalmique qui évite tout ou en partie des inconvénients précités.

En particulier, la présente invention a pour objectif de fournir un article d'optique transparent, notamment une lentille ophtalmique, comprenant un substrat en verre minéral ou organique comportant sur sa face avant un revêtement interférentiel multicouche anti-UV, de préférence antireflet, possédant de très bonnes performances antireflet dans le domaine visible, capable en même temps de réduire significativement la transmission du rayonnement UV, en particulier les UVA et UVB, comparativement à un substrat nu ou un substrat comportant un revêtement antireflet classique, et dont la préparation est industriellement aisée.

**EP 3 237 939 B1**

Résumé de l'invention

La présente invention est définie par les caractéristiques de la revendication 1.

Dans le cadre de l'invention, l'angle d'incidence est classiquement défini comme l'angle entre la normale à la surface au point d'incidence et la direction du faisceau lumineux contactant cette surface.

La présente invention concerne également un procédé de fabrication d'une lentille ophtalmique telle que définie ci-dessus, caractérisé en ce que le dépôt du revêtement interférentiel multicouche est réalisé sous vide.

Pour le reste de la description, à moins qu'il n'en soit spécifié autrement, l'indication d'un intervalle de valeurs « de X à Y » ou entre « X et Y », dans la présente invention, s'entend comme incluant les valeurs X et Y.

Dans la présente demande, lorsqu'un article d'optique (ou lentille ophtalmique) comprend un ou plusieurs revêtements à sa surface, l'expression "déposer une couche ou un revêtement sur l'article" signifie qu'une couche ou un revêtement est déposé sur la surface à découvert (exposée) du revêtement externe de l'article, c'est-à-dire son revêtement le plus éloigné du substrat.

Un revêtement qui est "sur" un substrat ou qui a été déposé "sur" un substrat est défini comme un revêtement qui (i) est positionné au-dessus du substrat, (ii) n'est pas nécessairement en contact avec le substrat, c'est-à-dire qu'un ou plusieurs revêtements intermédiaires peuvent être disposés entre le substrat et le revêtement en question, et (iii) ne recouvre pas nécessairement le substrat complètement.

Dans un mode de réalisation préféré, le revêtement sur un substrat ou déposé sur un substrat est en contact direct avec ce substrat.

Lorsque "une couche 1 est localisée sous une couche 2", on comprendra que la couche 2 est plus éloignée du substrat que la couche 1.

Par face arrière (ou interne) du substrat, on entend la face qui, lors de l'utilisation de l'article d'optique (ou lentille ophtalmique), est la plus proche de l'œil de l'utilisateur. Il s'agit généralement d'une face concave. Inversement, par face avant du substrat, on entend la face qui, lors de l'utilisation de l'article d'optique (ou lentille ophtalmique), est la plus éloignée de l'œil de l'utilisateur. Il s'agit généralement d'une face convexe.

Description des figures

L'invention sera décrite plus en détail en référence aux dessins annexés suivants, dans lesquels :

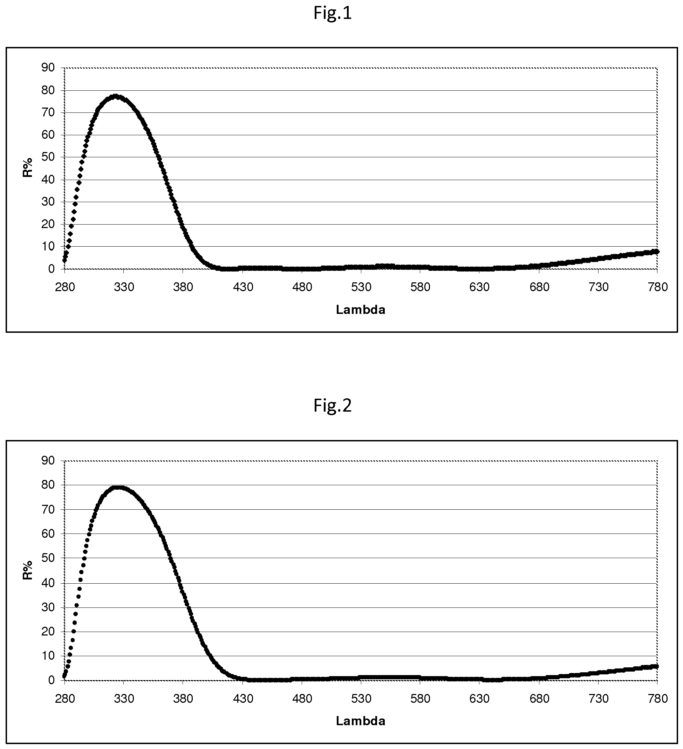

- la figure 1 et la figure 2 représentent un graphique illustrant la variation de la réflexion R en pourcentage (R%) d'un article optique (respectivement, lentille 1 et lentille 3) selon l'invention préparé respectivement selon l'exemple 1 et l'exemple 3 comprenant sur sa face principale avant un revêtement antireflet, à un angle d'incidence $\theta$ de 0°, en fonction de la longueur d'onde (lambda) dans le domaine des UVA (315 à 380 nm), des UVB (280 à 315 nm) et du visible (380 à 780 nm).

Description détaillée de l'invention

La Demanderesse s'est attachée au développement d'une nouvelle lentille ophtalmique présentant un nouvel empilement interférentiel multicouche, de préférence antireflet présentant une forte réflexion dans le domaine de l'ultraviolet sur la face avant (convexe) mesurée selon un angle d'incidence voisin de la normale.

La Demanderesse a montré que le nouvel empilement interférentiel multicouche selon l'invention permettait, de façon surprenante, de diminuer la quantité d'UV traversant les substrats, notamment les substrats Orma®, sans toutefois réfléchir la lumière visible et sans induire un jaunissement de la lentille.

La Demanderesse a également montré que le nouvel empilement interférentiel multicouche selon l'invention permettait d'augmenter fortement le facteur de protection solaire, sans pour autant augmenter le facteur de réflexion dans le visible.

Enfin, le procédé de réalisation de ce nouvel empilement interférentiel multicouche anti-UV est aisé à mettre en œuvre. En particulier, il est plus facile à mettre en œuvre que les absorbeurs d'UV que l'on doit incorporer dans le substrat. De plus, il requiert les mêmes matériaux que les revêtements d'antireflets standards.

La présente invention porte ainsi sur une lentille ophtalmique transparente comprenant un substrat ayant une face principale avant et une face principale arrière, ladite face principale avant étant revêtue d'un revêtement interférentiel multicouche, de préférence antireflet, comprenant un empilement d'au moins une couche ayant un indice de réfraction supérieur à 1,6, dite couche à haut indice de réfraction, et d'au moins une couche ayant un indice de réfraction inférieur à 1,55, dite couche à bas indice de réfraction, caractérisée en ce que :

○ le facteur moyen de réflexion sur ladite face principale avant revêtue dudit revêtement interférentiel, entre 350 nm et une longueur d'onde comprise entre 380 et 400nm, de préférence entre 350 et 380 nm, pondéré par la fonction

**4**

W(λ), est supérieur ou égal à 35% pour au moins un angle d'incidence compris entre 0° et 17°;

◦ le facteur de réflexion lumineuse à 400 nm sur ladite face principale avant revêtue dudit revêtement interférentiel est inférieur ou égal à 35% pour au moins un angle d'incidence compris entre 0° et 17°.

La présente invention propose en effet un revêtement interférentiel multicouche anti-UV à la conception améliorée, comportant un empilement de couches minces dont les épaisseurs et les matériaux ont été choisis de façon à optimiser les performances antireflet dans le domaine visible d'une part et dans le domaine UV d'autre part.

Cette optimisation des performances antireflet a été réalisée en prenant en compte la fonction de pondération W(λ) définie dans la norme ISO 13666:1998 qui exprime la répartition du rayonnement solaire UV pondérée par l'efficacité spectrale relative de ce rayonnement pour le porteur. Sur la gamme de longueur d'onde de 280 nm à 380 nm, le facteur moyen de réflexion correspond au facteur Ruv bien connu de l'homme du métier.

Afin de tenir compte de la lumière visible violette sur la gamme de 380 nm à 400 nm, la fonction de pondération W(λ) a été extrapolée jusqu'à 400 nm, définissant un analogue de Ruv étendu sur les lumières ultraviolette et violette.

Les inventeurs ont mis au point de façon inattendue un revêtement interférentiel multicouche anti-UV présentant une forte réflexion dans l'UV entrainant une diminution de la transmission des UV, permettant en conséquence première d'augmenter la valeur de l'ESPF. Cette diminution des UV transmis vers le substrat a pour seconde conséquence d'avoir un effet "protecteur" au niveau de celui-ci et par conséquent de limiter sa dégradation et donc son augmentation de l'indice de jaune au cours du temps.

Les revêtements interférentiels multicouches selon l'invention réalisent donc une réflexion spectrale plus importante entre 280 et 380 nm, sans conséquence pour le porteur, pour parvenir au meilleur compromis entre les performances antireflet dans le domaine visible et le domaine UV.

De manière générale, le revêtement interférentiel multicouche de la lentille ophtalmique selon l'invention, qui sera nommé "revêtement interférentiel réflecteur d'UV", peut être déposé sur tout substrat, et de préférence sur des substrats en verre organique, par exemple une matière plastique thermoplastique ou thermodurcissable.

Parmi les matériaux thermoplastiques convenant pour les substrats, on peut citer les (co)polymères (méth)acryliques, en particulier le poly(méthacrylate de méthyle) (PMMA), les (co)polymères thio(méth)acryliques, le polyvinylbutyral (PVB), les polycarbonates (PC), les polyesters tels que le poly(téréphtalate d'éthylène) (PET) ou le poly(téréphtalate de butylène) (PBT), les copolymères polycarbonates/polyesters, les copolymères de cyclo-oléfines tels que les copolymères éthylène/norbornène ou éthylène/cyclopentadiène et leurs combinaisons, les copolymères thermoplastiques éthylène/acétate de vinyle.

Parmi les matériaux thermodurcissables convenant pour les substrats, on peut citer les polyuréthanes (PU), les poly(thiouréthanes), les (co)polymères d'allylcarbonates de polyols, les polyépisulfures, les polyépoxydes.

D'autres matériaux thermodurcissables convenant pour les substrats sont des (co)polymères de type acryliques dont l'indice de réfraction est compris entre 1,5 et 1,65, typiquement proche de 1,6. Ces (co)polymères acryliques sont obtenus par polymérisation de mélanges de monomères (meth)acrylates et optionnellement de monomères allyliques et/ou vinyl aromatiques.

Les monomères (meth)acrylates peuvent être monofonctionnels ou multifonctionnels, portant typiquement de 2 à 6 groupes (meth)acrylates. Ces monomères peuvent être aliphatique, cycliques, aromatiques, polyalkoxylés, dérivés de composés tels que le Bisphénol et/ou portant d'autres fonctions telles que des époxy, thioépoxy, hydroxyl, thiol, sulfure, carbonate, uréthane et/ou isocyanate.

Par (co)polymère, on entend un copolymère ou un polymère. Par (méth)acrylate, on entend un acrylate ou un méthacrylate. Par polycarbonate (PC), on entend au sens de la présente invention aussi bien les homopolycarbonates que les copolycarbonates et les copolycarbonates séquencés. Les substrats peuvent être obtenus par polymérisation de mélanges des monomères ci-dessus, ou peuvent encore comprendre des mélanges de ces polymères et (co)polymères.

De préférence, le substrat selon l'invention présente un facteur de transmission T supérieur ou égal à 1% pour une longueur d'onde située entre 350 nm et 400 nm ;

Les substrats particulièrement recommandés sont les substrats obtenus par (co)polymérisation du bis allyl carbonate du diéthylèneglycol, vendu, par exemple, sous la dénomination commerciale CR-39® par la société PPG Industries (lentilles ORMA® ESSILOR), ou les subtrats de type acrylique.

En particulier, le substrat convenant pour l'invention est le substrat obtenu par (co)polymérisation du bis allyl carbonate du diéthylèneglycol (CR-39®, lentilles ORMA® ESSILOR).

Avant le dépôt du revêtement interférentiel réflecteur d'UV sur le substrat éventuellement revêtu, par exemple d'une couche anti-abrasion et/ou anti-rayures ou d'une sous-couche, il est courant de soumettre la surface dudit substrat, éventuellement revêtue, à un traitement d'activation physique ou chimique, destiné à augmenter l'adhésion du revêtement interférentiel réflecteur d'UV. Ce pré-traitement est généralement conduit sous vide. Il peut s'agir d'un bombardement avec des espèces énergétiques, par exemple un faisceau d'ions ("Ion Pre-Cleaning" ou "IPC"), d'un traitement par décharge corona, par effluvage, d'un traitement UV, ou d'un traitement par plasma sous vide, généralement un plasma d'oxygène ou d'argon. Il peut également s'agir d'un traitement de surface acide ou basique et/ou par solvants (eau ou solvant organique).

Dans la présente invention, le "facteur moyen de réflexion lumineuse," noté Rv, est tel que défini dans la norme ISO 13666:1998, et mesuré conformément à la norme ISO 8980-4 (à un angle d'incidence inférieur à 17°, typiquement de 15°, c'est-à-dire qu'il s'agit de la moyenne pondérée de la réflexion spectrale sur l'ensemble du spectre visible entre 380 et 780 nm. De préférence, le facteur de réflexion dans le visible Rv entre 380 nm et 780 nm sur ladite face principale avant revêtue dudit revêtement interférentiel réflecteur d'UV est inférieur ou égal à 3%, de préférence inférieur ou égal à 1,5%.

De préférence, le facteur de réflexion lumineuse à 400 nm sur ladite face principale avant revêtue dudit revêtement interférentiel réflecteur d'UV est inférieur ou égal à 25%, de préférence inférieur ou égal à 15% pour au moins un angle d'incidence compris entre 0° et 17°.

Selon l'invention, on définit le facteur moyen de réflexion entre 280 et 380 nm pondéré par la fonction W(λ) définie dans la norme ISO 13666:1998 et noté Ruv, par :

$$R_{UV} = \frac{\int\limits_{280}^{380} W(\lambda).R(\lambda).d\lambda}{\int\limits_{280}^{380} W(\lambda).d\lambda}$$

où R(λ) désigne le facteur de réflexion spectrale du verre à la longueur d'onde considérée, et W(λ) désigne une fonction de pondération égale au produit de l'éclairement énergétique spectral solaire Es(λ) et de la fonction spectrale relative d'efficacité S(λ).

Par analogie, le facteur moyen de réflexion pondéré par la fonction W(λ) peut être défini entre deux longueurs d'onde λ1 et λ2 en reprenant l'équation ci-dessus et en prenant pour limites des intégrales les longueurs d'onde λ1 et λ2.

La fonction spectrale W(λ), qui permet de calculer les facteurs moyens de transmission des rayonnements UV est définie dans la norme ISO 13666:1998. Elle permet d'exprimer la répartition du rayonnement solaire UV modérée par l'efficacité spectrale relative de ce rayonnement pour le porteur, puisqu'elle tient compte en même temps de l'énergie spectrale du soleil Es(λ), qui globalement émet peu d'UVB par rapport aux UVA, et de l'efficacité spectrale S(λ), les UVB étant plus nocifs que les UVA. Cette fonction a été extrapolée pour la lumière visible violette de 385 à 400 nm dans le cadre de l'invention. Les valeurs de ces trois fonctions dans le domaine UV sont indiquées dans le tableau 2 suivant (les zones grisées sont extrapolées) :

| λ (nm) | Es(λ) (mW/m².nm) | S(λ) | W(λ)= Es(λ).S(λ) |
|---|---|---|---|
| 280 | 0 | 0.88 | 0 |
| 285 | 0 | 0.77 | 0 |
| 290 | 0 | 0.64 | 0 |
| 295 | $2.09 \times 10^{-4}$ | 0.54 | 0.00011 |
| 300 | $8.10 \times 10^{-2}$ | 0.30 | 0.0243 |
| 305 | 1.91 | 0.060 | 0.115 |
| 310 | 11.0 | 0.015 | 0.165 |
| 315 | 30.0 | 0.003 | 0.09 |
| 320 | 54.0 | 0.0010 | 0.054 |
| 325 | 79.2 | 0.00050 | 0.04 |
| 330 | 101 | 0.00041 | 0.041 |
| 335 | 128 | 0.00034 | 0.044 |

| λ (nm) | Es(λ) (mW/m².nm) | S(λ) | W(λ)= Es(λ).S(λ) |
|---|---|---|---|
| 340 | 151 | 0.00028 | 0.042 |
| 345 | 170 | 0.00024 | 0.041 |
| 350 | 188 | 0.00020 | 0.038 |
| 355 | 210 | 0.00016 | 0.034 |
| 360 | 233 | 0.00013 | 0.03 |
| 365 | 253 | 0.00011 | 0.028 |
| 370 | 279 | 0.000093 | 0.026 |
| 375 | 306 | 0.000077 | 0.024 |
| 380 | 336 | 0.000064 | 0.022 |
| 385 | | | 0.02 |
| 390 | | | 0.018 |
| 395 | | | 0.016 |
| 400 | | | 0.014 |

*Tableau 2*

Il convient de remarquer que la fonction de pondération W(λ) est nulle ou quasi nulle entre 280 nm et 295 nm, ce qui signifie que le facteur moyen de réflexion pondéré est également nul dans cette gamme de longueur d'onde. Ceci signifie que même si le niveau de réflexion est élevé sur cette plage spectrale, il n'y aura pas de conséquence sur la valeur du facteur moyen de réflexion pondéré Ruv calculé entre 280 et 380 nm.

Conformément à l'invention, le revêtement interférentiel réflecteur d'UV déposé sur la face principale avant du substrat présente de préférence un facteur moyen de réflexion sur ladite face principale avant entre 350 nm et une longueur d'onde comprise entre 380 et 400nm, pondéré par la fonction W($\lambda$), supérieur ou égal à 50%, de préférence supérieur ou égal 65% pour au moins un angle d'incidence compris entre 0° et 17°.

Selon une caractéristique de l'invention, les coefficients colorimétriques du revêtement interférentiel réflecteur d'UV de l'invention dans le système colorimétrique CIE L*a*b* sont calculés entre 380 et 780 nm en tenant compte de l'illuminant D65 et de l'observateur 10°.

Il est possible de préparer des revêtements interférentiels réflecteur d'UV sans limitation quant à leur angle de teinte. Cependant, l'angle de teinte h varie de préférence de 90° à 180°, de préférence de 120° à 150° ce qui produit un revêtement ayant un reflet vert, et la chroma C* est en général inférieure ou égale à 15, mieux inférieure à égale 10 pour au moins un angle d'incidence compris entre 0° et 17°.

Le revêtement interférentiel réflecteur d'UV, de préférence antireflet de l'invention comprend un empilement d'au moins une couche de haut indice de réfraction et d'au moins une couche de bas indice de réfraction. Mieux, il comprend au moins deux couches de bas indice de réfraction (BI) et au moins deux couches de haut indice de réfraction (HI). Il s'agit d'un empilement simple, car le nombre total de couches du revêtement interférentiel réflecteur d'UV est supérieur ou égal à 3, préférentiellement supérieur ou égal à 4.

En particulier, le revêtement interférentiel réflecteur d'UV de l'invention comprend un nombre de couches supérieur ou égal à 3, de préférence supérieur ou égal à 4, idéalement supérieur ou égal à 6 et un nombre de couches inférieur ou égal à 10, de préférence inférieur ou égal à 8.

Une couche du revêtement interférentiel réflecteur d'UV est définie comme ayant une épaisseur supérieure ou égale à 1 nm. Ainsi, toute couche ayant une épaisseur inférieure à 1 nm ne sera pas comptabilisée dans le nombre de couches du revêtement interférentiel réflecteur d'UV.

Sauf indication contraire, toutes les épaisseurs divulguées dans la présente demande sont des épaisseurs physiques.

Il n'est pas nécessaire que les couches HI et BI soient alternées dans l'empilement, bien qu'elles puissent l'être selon un mode de réalisation de l'invention. Deux couches HI (ou plus) peuvent être déposées l'une sur l'autre, tout comme deux couches BI (ou plus) peuvent être déposées l'une sur l'autre.

Dans la présente demande, une couche du revêtement interférentiel réflecteur d'UV, de préférence antireflet est dite couche de haut indice de réfraction (HI) lorsque son indice de réfraction est supérieur à 1,6, de préférence supérieur ou égal à 1,65, de préférence encore supérieur ou égal à 1,7, mieux supérieur ou égal à 1,8 et encore mieux supérieur ou égal à 1,9. Une couche du revêtement interférentiel réflecteur d'UV, de préférence antireflet est dite couche de bas indice de réfraction (BI) lorsque son indice de réfraction est inférieur à 1,55, de préférence inférieur ou égal à 1,48, mieux inférieur ou égal à 1,47.

Sauf indication contraire, les indices de réfraction auxquels il est fait référence dans la présente demande sont exprimés à 25°C pour une longueur d'onde de 550 nm.

La couche HI est une couche de haut indice de réfraction classique, bien connue dans la technique. Elle comprend généralement un ou plusieurs oxydes minéraux tels que, sans limitation, la zircone ($ZrO_2$), l'oxyde de titane ($TiO_2$), l'alumine ($Al_2O_3$), le pentoxyde de tantale ($Ta_2O_5$), l'oxyde de néodyme ($Nd_2O_5$), l'oxyde de praséodyme (Pr2O3), le titanate de praséodyme (PrTiO3), La2O3i Nb2O5i Y2O3. Eventuellement, les couches haut indice peuvent contenir également de la silice ou d'autres matériaux de bas indice de réfraction, pourvu que leur indice de réfraction soit supérieur à 1,6 comme indiqué ci-dessus. Les matériaux préférés sont $TiO_2$, $PrTiO_3$, $ZrO_2$, $Ta_2O_5$, $Al_2O_3$, $Y_2O_3$ et leurs mélanges.

De préférence, la ou les couches HI sont en zircone ($ZrO_2$).

La couche BI est également bien connue et peut comprendre, sans limitation, de l'oxyde de silicium, ou bien un mélange de silice et d'alumine, en particulier de la silice dopée avec de l'alumine, cette dernière contribuant à augmenter la résistance thermique du revêtement interférentiel réflecteur d'UV. La couche BI est de préférence une couche comprenant au moins 80 % en masse de silice, mieux au moins 90 % en masse de silice, par rapport à la masse totale de la couche, et encore mieux consiste en une couche de silice.

Eventuellement, les couches bas indice peuvent contenir également des matériaux de haut indice de réfraction, pourvu que l'indice de réfraction de la couche résultante soit inférieur à 1,55.

Lorsqu'une couche BI comprenant un mélange de $SiO_2$ et d'$Al_2O_3$ est utilisée, elle comprend préférentiellement de 1 à 10 %, mieux de 1 à 8 % et encore mieux de 1 à 5 % en masse d'$Al_2O_3$ par rapport à la masse totale de $SiO_2$ + $Al_2O_3$ dans cette couche.

Par exemple, $SiO_2$ dopé avec 4 % ou moins d'$Al_2O_3$ en masse, ou $SiO_2$ dopé avec 8 % d'$Al_2O_3$ peuvent être employés. Des mélanges $SiO_2$/$Al_2O_3$ disponibles dans le commerce peuvent être utilisés, tels que le LIMA® commercialisé par Umicore Materials AG (indice de réfraction n = 1,48-1,50 à 550 nm), ou la substance L5® commercialisée par Merck KGaA (indice de réfraction n = 1,48 à 500 nm).

La couche externe du revêtement antireflet réflecteur d'UV est en général une couche à base de silice, comprenant de préférence au moins 80 % en masse de silice, mieux au moins 90 % en masse de silice (par exemple une couche de silice dopée avec de l'alumine), par rapport à la masse totale de la couche, et encore mieux consiste en une couche de silice.

Généralement, les couches HI ont une épaisseur physique variant de 10 à 120 nm, et les couches BI ont une épaisseur physique variant de 10 à 100 nm.

Généralement, l'épaisseur totale du revêtement interférentiel réflecteur d'UV est inférieure à 1 micromètre, de préférence inférieure ou égale à 800 nm, mieux inférieure ou égale à 500 nm et encore mieux inférieure ou égale à 250 nm. L'épaisseur totale du revêtement interférentiel réflecteur d'UV est généralement supérieure à 100 nm, de préférence supérieure à 150 nm.

Selon une variante préférée de réalisation, le revêtement interférentiel réflecteur d'UV selon l'invention ne contient pas de titane.

Selon un mode de réalisation de l'invention, le revêtement interférentiel réflecteur d'UV, de préférence antireflet est déposé sur une sous-couche. Il est considéré que cette sous-couche ne fait pas partie du revêtement interférentiel réflecteur d'UV.

Par sous-couche du revêtement interférentiel réflecteur d'UV, on entend un revêtement d'épaisseur relativement importante, utilisé dans le but d'améliorer les propriétés mécaniques telles que la résistance à l'abrasion et/ou à la rayure dudit revêtement et/ou de promouvoir son adhésion au substrat ou au revêtement sous-jacent.

Compte tenu de son épaisseur relativement importante, la sous-couche ne participe généralement pas à l'activité optique anti-réfléchissante, en particulier dans le cas où elle possède un indice de réfraction proche de celui du revêtement sous-jacent (qui est généralement le revêtement anti-abrasion et anti-rayures) ou de celui du substrat, lorsque la sous-couche est directement déposée sur le substrat. Par conséquent, la sous-couche, lorsqu'elle est présente, n'est pas considérée comme faisant partie du revêtement interférentiel réflecteur d'UV.

La sous-couche doit avoir une épaisseur suffisante pour promouvoir la résistance à l'abrasion du revêtement interférentiel réflecteur d'UV, mais de préférence pas trop importante pour ne pas provoquer une absorption lumineuse qui, selon la nature de la sous-couche, pourrait réduire significativement le facteur relatif de transmission $\tau_v$. Son épaisseur est généralement inférieure à 300 nm, mieux 200 nm, et est généralement supérieure à 90 nm, mieux 100 nm.

La sous-couche comprend de préférence une couche à base de $SiO_2$, cette couche comprenant de préférence au moins 80 % en masse de silice, mieux au moins 90 % en masse de silice, par rapport à la masse totale de la couche, et encore mieux consiste en une couche de silice. L'épaisseur de cette couche à base de silice est généralement inférieure à 300 nm, mieux 200 nm, et est généralement supérieure à 90 nm, mieux 100 nm.

Selon un autre mode de réalisation, cette couche à base de $SiO_2$ est une couche de silice dopée avec de l'alumine, dans des proportions telles que définies ci-dessus, de préférence consiste en une couche de silice dopée avec de l'alumine.

Selon un mode de réalisation particulier, la sous-couche consiste en une couche de $SiO_2$.

Il est préférable d'utiliser une sous-couche de type monocouche. Toutefois, la sous-couche peut être laminée (multicouche), en particulier lorsque la sous-couche et le revêtement sous-jacent (ou le substrat, si la sous-couche est déposée directement sur le substrat) présentent une différence d'indice de réfraction non négligeable.

La lentille ophtalmique de l'invention peut être rendue antistatique, c'est-à-dire ne pas retenir et/ou développer une charge électrostatique appréciable, grâce à l'incorporation d'au moins une couche électriquement conductrice dans l'empilement présent à la surface de la lentille ophtalmique. Cette couche électriquement conductrice est de préférence localisée entre deux couches du revêtement interférentiel réflecteur d'UV, et/ou est adjacente à une couche de haut indice de réfraction de ce revêtement interférentiel réflecteur d'UV. De préférence, la couche électriquement conductrice est localisée immédiatement sous une couche de bas indice de réfraction du revêtement interférentiel réflecteur d'UV, idéalement constitue l'avant dernière couche du revêtement interférentiel réflecteur d'UV en étant localisée immédiatement sous la couche externe à base de silice du revêtement interférentiel réflecteur d'UV.

La couche électriquement conductrice doit être suffisamment fine pour ne pas altérer la transparence du revêtement interférentiel réflecteur d'UV. La couche électriquement conductrice est de préférence fabriquée à partir d'un matériau électriquement conducteur et hautement transparent, généralement un oxyde métallique éventuellement dopé. Dans ce cas, son épaisseur varie de préférence de 1 à 15 nm, mieux de 1 à 10 nm. La couche électriquement conductrice comprend de préférence un oxyde métallique, éventuellement dopé, choisi parmi les oxydes d'indium, d'étain, de zinc et leurs mélanges. L'oxyde d'étain-indium ($In_2O_3$:Sn, oxyde d'indium dopé à l'étain), l'oxyde de zinc dopé à l'aluminium (ZnO:Al), l'oxyde d'indium ($In_2O_3$) et l'oxyde d'étain ($SnO_2$) sont préférés. Selon un mode de réalisation optimal, la couche électriquement conductrice et optiquement transparente est une couche d'oxyde d'étain-indium, notée couche d'ITO ou une couche d'oxyde d'étain.

Généralement, la couche électriquement conductrice contribue, au sein de l'empilement, mais de façon limitée, en raison de sa faible épaisseur, à l'obtention de propriétés anti réfléchissantes et constitue une couche de haut indice de réfraction dans le revêtement interférentiel réflecteur d'UV. C'est le cas de couches fabriquées à partir d'un matériau électriquement conducteur et hautement transparent telles que les couches d'ITO.

Les différentes couches du revêtement interférentiel réflecteur d'UV et l'éventuelle sous-couche sont préférentiellement déposées par dépôt sous vide selon l'une des techniques suivantes :

i) par évaporation, éventuellement assistée par faisceau ionique
ii) par pulvérisation par faisceau d'ion
iii) par pulvérisation cathodique
iv) par dépôt chimique en phase vapeur assisté par plasma.

Ces différentes techniques sont décrites dans les ouvrages "Thin Film Processes" and "Thin Film Processes II," Vossen & Kern, Ed., Academic Press, 1978 et 1991 respectivement. Une technique particulièrement recommandée est la technique d'évaporation sous vide.

De préférence, le dépôt de chacune des couches du revêtement interférentiel réflecteur d'UV et de l'éventuelle sous-couche est réalisé par évaporation sous vide.

Selon un mode de réalisation de l'invention, le revêtement interférentiel anti-UV comprend, dans le sens de l'éloignement du substrat éventuellement revêtu d'un ou plusieurs revêtements fonctionnels et d'une sous-couche de 100 à 200 nm d'épaisseur, de préférence en silice,

- une couche de haut indice de réfraction ayant un indice de réfraction supérieur à 1,6 de 15 à 39 nm d'épaisseur,
- une couche de bas indice de réfraction ayant un indice de réfraction inférieur à 1,55 de 26 à 62 nm d'épaisseur,
- une couche de haut indice de réfraction ayant un indice de réfraction supérieur à 1,6 de 24 à 63 nm d'épaisseur,
- une couche de bas indice de réfraction ayant un indice de réfraction inférieur à 1,55 de 52 à 81 nm d'épaisseur,
- une couche de haut indice de réfraction ayant un indice de réfraction supérieur à 1,6 de 24 à 45 nm d'épaisseur,
- une couche de bas indice de réfraction ayant un indice de réfraction inférieur à 1,55 de 27 à 64 nm d'épaisseur,
- une couche de haut indice de réfraction ayant un indice de réfraction supérieur à 1,6 de 28 à 58 nm d'épaisseur,
- optionnellement une couche électriquement conductrice de 3 à 10 nm d'épaisseur, et
- une couche de bas indice de réfraction ayant un indice de réfraction inférieur à 1,55 de 84 à 116 nm d'épaisseur.

Selon un autre mode de réalisation, le revêtement interférentiel réflecteur d'UV comprend, dans le sens de l'éloignement du substrat, éventuellement revêtu d'un ou plusieurs revêtements fonctionnels et d'une sous-couche de 100 à 200 nm d'épaisseur, de préférence en silice,

- une couche de haut indice de réfraction ayant un indice de réfraction supérieur à 1,6 de 15 à 35 nm d'épaisseur,
- une couche de bas indice de réfraction ayant un indice de réfraction inférieur à 1,55 de 42 à 62 nm d'épaisseur,
- une couche de haut indice de réfraction ayant un indice de réfraction supérieur à 1,6 de 24 à 44 nm d'épaisseur,
- une couche de bas indice de réfraction ayant un indice de réfraction inférieur à 1,55 de 61 à 81 nm d'épaisseur,
- une couche de haut indice de réfraction ayant un indice de réfraction supérieur à 1,6 de 25 à 45 nm d'épaisseur,
- une couche de bas indice de réfraction ayant un indice de réfraction inférieur à 1,55 de 27 à 57 nm d'épaisseur,
- une couche de haut indice de réfraction ayant un indice de réfraction supérieur à 1,6 de 30 à 58 nm d'épaisseur,
- optionnellement une couche électriquement conductrice de 3 à 10nm d'épaisseur, et
- une couche de bas indice de réfraction ayant un indice de réfraction inférieur à 1,55 de 84 à 114 nm d'épaisseur.

Selon un autre mode de réalisation, le revêtement interférentiel réflecteur d'UV comprend, dans le sens de l'éloignement du substrat, éventuellement revêtu d'un ou plusieurs revêtements fonctionnels et d'une sous-couche de 100 à 200 nm d'épaisseur, de préférence en silice,

- une couche de haut indice de réfraction ayant un indice de réfraction supérieur à 1,6 de 19 à 39 nm d'épaisseur,
- une couche de bas indice de réfraction ayant un indice de réfraction inférieur à 1,55 de 26 à 46 nm d'épaisseur,
- une couche de haut indice de réfraction ayant un indice de réfraction supérieur à 1,6 de 43 à 63 nm d'épaisseur,
- une couche de bas indice de réfraction ayant un indice de réfraction inférieur à 1,55 de 52 à 72 nm d'épaisseur,
- une couche de haut indice de réfraction ayant un indice de réfraction supérieur à 1,6 de 24 à 44 nm d'épaisseur,
- une couche de bas indice de réfraction ayant un indice de réfraction inférieur à 1,55 de 44 à 64 nm d'épaisseur,
- une couche de haut indice de réfraction ayant un indice de réfraction supérieur à 1,6 de 28 à 48 nm d'épaisseur,
- optionnellement une couche électriquement conductrice de 3 à 10 nm d'épaisseur, et
- une couche de bas indice de réfraction ayant un indice de réfraction inférieur à 1,55 de 95 à 116 nm d'épaisseur.

Selon un mode de réalisation préféré de l'invention, la face arrière de la lentille ophtalmique de l'invention est également revêtue d'un revêtement antireflet conventionnel, différent de celui se trouvant sur sa face avant visant à limiter la réflexion des UV venant des côtés et/ou de l'arrière de la lentille.

Ainsi, selon un mode de réalisation préféré, la face arrière de la lentille ophtalmique est revêtue d'un revêtement antireflet tel que le facteur de réflexion dans l'UV $R_{uv}$ sur ladite face principale arrière entre 280 nm et 380 nm pondéré par la fonction W($\lambda$) est inférieur ou égal à 10%, de préférence inférieur ou égal à 5%, idéalement inférieur ou égal à 3%, pour un angle d'incidence de 35°.

Dans le cadre de l'invention, la valeur ESPF d'une lentille ophtalmique est donnée par la relation suivante :

$$ESPF = \frac{100\%}{T_{UV}^{0°}(\%) + R_{UV}^{35°}(\%)}$$

où

$T_{UV}^{0°}(\%)$ est la quantité d'UV (entre 280 et 380 nm) transmis à un angle d'incidence de 0° (ie la source UV est perpendiculaire au verre),

$R_{UV}^{35°}(\%)$ est la quantité d'UV (entre 280nm et 380nm) réfléchis à un angle d'incidence de 35° en face arrière.

Les valeurs de ESPF calculé selon la formule ci-dessous sont illustrés dans le tableau suivant, pour des valeurs de Ruv en face arrière inférieures à 5%, pour différentes valeurs de Ruv en face avant et pour le matériau ORMA® :

| ESPF | (1-Ruv)@0° face avant sur ORMA® | | | | | |
|---|---|---|---|---|---|---|
| Ruv@35° arrière | 1 | 0,65 | 0,5 | 0,35 | 0,2 | 0 |
| 0,05 | 11,27 | 13,31 | 14,42 | 15,74 | 17,32 | 20,00 |
| 0,04 | 12,71 | 15,35 | 16,85 | 18,68 | 20,95 | 25,00 |
| 0,03 | 14,56 | 18,13 | 20,26 | 22,96 | 26,50 | 33,33 |
| 0,02 | 17,04 | 22,15 | 25,41 | 29,81 | 36,05 | 50,00 |
| 0,01 | 20,53 | 28,45 | 34,07 | 42,47 | 56,37 | 100,00 |

*Tableau 3*

Les cases gris clair correspondent à un ESPF de 15 à 20 et les cases gris foncé à un ESPF supérieur à 20.

Ainsi, la lentille ophtalmique comprenant le revêtement interférentiel réflecteur d'UV selon l'invention et un revêtement antireflet pour les UV (tel que mentionné ci-dessus) en face arrière présente un excellent indice de protection solaire ESPF.

De préférence, le coefficient ESPF de la lentille ophtalmique selon l'invention est supérieur à 10, de préférence supérieur à 15, idéalement supérieur à 20.

Il est toutefois possible d'appliquer un revêtement interférentiel réflecteur d'UV réflecteur d'UV tel que décrit dans la présente demande sur la face arrière de la lentille ophtalmique. Les revêtements interférentiels multicouches réflecteur d'UV de la face avant et de la face arrière peuvent alors être identiques ou différents.

Selon un mode de réalisation de l'invention, la face arrière de lentille ophtalmique n'est pas revêtue d'un revêtement interférentiel multicouche réflecteur d'UV selon l'invention.

Le revêtement interférentiel réflecteur d'UV peut être déposé directement sur un substrat nu.

Dans certaines applications, il est préférable que la face principale du substrat soit revêtue d'un ou plusieurs revêtements fonctionnels préalablement au dépôt du revêtement interférentiel réflecteur d'UV de l'invention.

Ces revêtements fonctionnels classiquement utilisés en optique peuvent être, sans limitation, une couche de primaire antichoc, un revêtement anti-abrasion et/ou anti-rayures, un revêtement polarisé, un revêtement photochrome ou un revêtement coloré.

Préférentiellement, la lentille ophtalmique ne comprend pas de revêtement photochrome et/ou ne comprend pas de substrat photochrome.

Généralement, la face principale avant du substrat sur laquelle sera déposé un revêtement interférentiel réflecteur d'UV est revêtue d'une couche de primaire antichoc, d'un revêtement anti-abrasion et/ou anti-rayures, ou d'une couche de primaire antichoc revêtue d'un revêtement anti-abrasion et/ou anti-rayures.

Le revêtement interférentiel réflecteur d'UV de l'invention est de préférence déposé sur un revêtement anti-abrasion et/ou anti-rayures. Le revêtement anti-abrasion et/ou anti-rayures peut être toute couche classiquement utilisée comme revêtement anti-abrasion et/ou anti-rayure dans le domaine des lentilles ophtalmiques.

Les revêtements résistant à l'abrasion et/ou à la rayure sont de préférence des revêtement durs à base de poly(méth)acrylates ou de silanes comprenant généralement une ou plusieurs charges minérales destinées à augmenter la dureté et/ou l'indice de réfraction du revêtement une fois durci.

Les revêtements durs anti-abrasion et/ou anti-rayure sont de préférence élaborés à partir de compositions comprenant au moins un alcoxysilane et/ou un hydrolysat de celui-ci, obtenu par exemple par hydrolyse avec une solution d'acide chlorhydrique et optionnellement des catalyseurs de condensation et/ou de durcissement.

Parmi les revêtements recommandés dans la présente invention, on peut citer les revêtements à base d'hydrolysats d'époxysilanes tels que ceux décrits dans les brevets FR 2702486 (EP 0614957), US 4,211,823 et US 5,015,523.

Une composition pour revêtement anti-abrasion et/ou anti-rayures préférée est celle divulguée dans le brevet FR 2702486, au nom du déposant. Elle comprend un hydrolysat d'époxy trialcoxysilane et de dialkyl dialcoxysilane, de la silice colloïdale et une quantité catalytique de catalyseur de durcissement à base d'aluminium tel que l'acétylacétonate d'aluminium, le reste étant essentiellement constitué par des solvants classiquement utilisés pour la formulation de telles compositions. Préférentiellement, l'hydrolysat utilisé est un hydrolysat de y- glycidoxypropyltriméthoxysilane (GLYMO) et de diméthyldiéthoxysilane (DMDES).

La composition de revêtement anti-abrasion et/ou anti-rayures peut être déposée sur la face principale du substrat par trempage ou centrifugation. Elle est ensuite durcie par la voie appropriée (de préférence thermique, ou UV).

L'épaisseur du revêtement anti-abrasion et/ou anti-rayures varie généralement de 2 à 10 $\mu$m, préférentiellement de 3 à 5 $\mu$m.

Préalablement au dépôt du revêtement anti-abrasion et/ou anti-rayures, il est possible de déposer sur le substrat un revêtement de primaire améliorant la résistance aux chocs et/ou l'adhésion des couches ultérieures dans le produit final. Ce revêtement peut être toute couche de primaire antichoc classiquement utilisée pour les articles en matériau polymère transparent, tels que des lentilles ophtalmiques.

Parmi les compositions de primaire préférées, on peut citer les compositions à base de polyuréthanes thermoplastiques, telles que celles décrites dans les brevets japonais JP 63-141001 et JP 63-87223, les compositions de primaire poly(méth)acryliques, telles que celles décrites dans le brevet US 5,015,523, les compositions à base de polyuréthanes thermodurcissables, telles que celles décrites dans le brevet EP 0404111 et les compositions à base de latex poly(méth)acryliques ou de latex de type polyuréthane, telles que celles décrites dans les brevets US 5,316,791 et EP 0680492.

Les compositions de primaire préférées sont les compositions à base de polyuréthanes et les compositions à base de latex, en particulier les latex de polyuréthane contenant optionnellement des motifs polyesters.

Parmi les compositions de primaire commerciales convenant pour l'invention, on peut citer les compositions Witcobond(R) 232, Witcobond(R) 234, Witcobond(R) 240, Witcobond(R) 242, Neorez(R) R- 962, Neorez(R) R-972, Neorez(R) R-986 et Neorez(R) R-9603.

On peut également utiliser dans les compositions de primaire des mélanges de ces latex, en particulier de latex polyuréthane et de latex poly(méth)acrylique.

Ces compositions de primaire peuvent être déposées sur les faces de l'article par trempage ou centrifugation puis séchées à une température d'au moins 70 °C et pouvant aller jusqu'à 100 °C, de préférence de l'ordre de 90°C, pendant une durée de 2 minutes à 2 heures, généralement de l'ordre de 15 minutes, pour former des couches de primaire ayant des épaisseurs, après cuisson, de 0,2 à 2,5 $\mu$m, de préférence de 0,5 à 1,5 $\mu$m.

La lentille ophtalmique selon l'invention peut également comporter des revêtements formés sur le revêtement interférentiel réflecteur d'UV et capables de modifier ses propriétés de surface, tels que des revêtements hydrophobes et/ou oléophobes (top coat anti-salissure). Ces revêtements sont de préférence déposés sur la couche externe du revêtement interférentiel réflecteur d'UV. Leur épaisseur est en général inférieure ou égale à 10 nm, de préférence de 1 à 10 nm, mieux de 1 à 5 nm.

Il s'agit généralement de revêtements de type fluorosilane ou fluorosilazane. Ils peuvent être obtenus par dépôt d'un fluorosilane ou fluorosilazane précurseur, comprenant de préférence au moins deux groupes hydrolysables par molécule. Les fluorosilanes précurseurs contiennent préférentiellement des groupements fluoropolyéthers et mieux des groupements perfluoropolyéthers. Ces fluorosilanes sont bien connus et sont décrits, entre autres, dans les brevets US 5,081,192, US 5,763,061, US 6,183, 872, US 5,739, 639, US 5,922,787, US 6,337,235, US 6,277,485 et EP 0933377.

Une composition de revêtement hydrophobe et/ou oléophobe préférée est commercialisée par Shin-Etsu Chemical sous la dénomination KP 801 M(R). Une autre composition de revêtement hydrophobe et/ou oléophobe préférée est commercialisée par Daikin Industries sous la dénomination OPTOOL DSX(R). Il s'agit d'une résine fluorée comprenant des groupes perfluoropropylène.

Typiquement, une lentille ophtalmique selon l'invention comprend un substrat successivement revêtu sur sa face avant d'une couche de primaire antichoc, d'une couche antiabrasion et/ou antirayure, d'un revêtement interférentiel multicouche anti-UV selon l'invention, et d'un revêtement hydrophobe et/ou oléophobe. La lentille ophtalmique selon l'invention est de préférence une lentille ophtalmique pour lunettes (verre de lunettes), ou une ébauche de lentille ophtalmique. La lentille peut être une lentille polarisée, une lentille photochrome ou une lentille solaire, teintée, avec ou sans correction.

La face arrière du substrat de lentille ophtalmique peut être revêtue successivement d'une couche de primaire antichoc, d'une couche anti-abrasion et/ou anti-rayures, d'un revêtement antireflet qui peut être, ou non, un revêtement interférentiel multicouche anti-UV selon l'invention, et d'un revêtement hydrophobe et/ou oléophobe.

Selon un mode de réalisation, la lentille ophtalmique selon l'invention n'absorbe pas dans le visible ou absorbe peu dans le visible, ce qui signifie, au sens de la présente demande, que son facteur de transmission dans le visible $\tau v$, encore nommé facteur relatif de transmission dans le visible, est supérieur à 90 %, mieux supérieur à 95 %, mieux encore supérieur à 96 % et de façon optimale supérieur à 97 %. Le facteur $\tau v$ répond à une définition internationale normalisée (norme ISO 13666:1998) et est mesuré conformément à la norme ISO 8980-3. Il est défini dans la gamme de longueur d'onde allant de 380 à 780 nm.

De préférence, l'absorption lumineuse de la lentille ophtalmique revêtue selon l'invention est inférieure ou égale à 1 %.

En outre, la lentille ophtalmique selon l'invention entre avantageusement dans la réalisation de paire de lunettes. Ainsi, l'invention propose également une paire de lunettes comportant au moins une lentille ophtalmique selon l'invention.

Enfin, la présente invention a trait à un procédé de fabrication d'une lentille ophtalmique telle que décrite ci-dessus, caractérisé en ce que le dépôt du revêtement interférentiel réflecteur d'UV est réalisé sous vide.

En particulier, le revêtement interférentiel réflecteur d'UV est déposé sous vide selon l'une des techniques suivantes :

i) par évaporation, éventuellement assistée par faisceau ionique
ii) par pulvérisation par faisceau d'ion
iii) par pulvérisation cathodique
iv) par dépôt chimique en phase vapeur assisté par plasma.

Ces différentes techniques sont décrites dans les ouvrages "Thin Film Processes" and "Thin Film Processes II," Vossen & Kern, Ed., Academic Press, 1978 et 1991 respectivement. Une technique particulièrement recommandée est la technique d'évaporation sous vide.

Exemples

1. Procédures générales

Les lentilles ophtalmiques employées dans les exemples comprennent un substrat de lentille 30 ORMA® ESSILOR de 65 mm de diamètre, d'indice de réfraction 1,50, de puissance-2,00 dioptries et d'épaisseur 1,2 mm, revêtu sur sa face arrière du revêtement anti-abrasion et anti-rayures (hard coat) divulgué dans l'exemple 3 du brevet EP 0614957 (d'indice de réfraction égal à 1,47 et d'épaisseur 3,5 $\mu$m), à base d'un hydrolysat de GLYMO et DMDES, de silice colloïdale et d'acétylacétonate d'aluminium, puis d'un revêtement interférentiel multicouche antireflet conforme à l'invention.

Ledit revêtement anti-abrasion et anti-rayures a été obtenu par dépôt et durcissement d'une composition comprenant en masse, 224 parties de GLYMO, 80,5 parties de HCl 0,1 N, 120 parties de DMDES, 718 parties de silice colloïdale à 30 % massique dans le méthanol, 15 parties d'acétylacétonate d'aluminium et 44 parties d'éthylcellosolve. La composition comporte également 0,1 % de tensioactif FLUORADTM FC-430(R) de 3M en masse par rapport à la masse totale de la composition.

Les couches du revêtement antireflet ont été déposées sans chauffage des substrats par évaporation sous vide (source d'évaporation : canon à électrons).

Le bâti de dépôt est une machine Satis 1200DLF équipé d'un canon à électrons Temescal (8kV) pour l'évaporation des oxydes, et d'un canon à ions (Veeco Mark II) pour la phase préliminaire de préparation de la surface du substrat par des ions argon (IPC).

L'épaisseur des couches est contrôlée au moyen d'une microbalance à quartz. Les mesures spectrales ont été effectuées sur un spectrophotomètre à incidence variable Perkin-Elmer Lambda 850 avec un accessoire URA (Universal Reflectance Accessory).

2. Mode opératoire

Le procédé de préparation des lentilles ophtalmiques comprend l'introduction du substrat revêtu sur sa face avant du revêtement anti-abrasion et anti-rayure dans une enceinte de dépôt sous vide, une étape de pompage jusqu'à l'obtention d'un vide secondaire, une étape d'activation de la surface du substrat par un faisceau d'ions argon, l'arrêt de l'irradiation ionique, la formation sur le revêtement anti-abrasion et anti-rayure de la sous-couche puis des différentes couches du revêtement antireflet par évaporations successives et enfin une étape de ventilation.

3. Compositions testées

Les caractéristiques structurelles et performances optiques des lentilles ophtalmiques 1 à 3 obtenues selon les exemples 1 à 3 sont détaillées ci-dessous. La sous-couche apparaît en grisé. La fine couche ITO apporte une propriété antistatique au verre. Son indice optique est proche de $ZrO_2$. On considère donc que la couche ITO et la couche $ZrO_2$ forment une couche de haut indice de réfraction.

Les valeurs des facteurs moyens de réflexion dans l'UV et dans le visible sont celles de la face avant et sont indiqués pour un angle d'incidence de 0° (mesures réalisées selon la norme ISO8980-4).

|  | Indice de Réfraction | Lentille 1<br>**Example 1**<br>(épaisseur physique) | Lentille 2<br>**Example 2**<br>(épaisseur physique) | Lentille 3<br>**Example 3**<br>(épaisseur physique) |
|---|---|---|---|---|
| Air | 1 |  |  |  |
| $SiO_2$ | 1,47256 | 94 nm | 105 nm | 106 nm |
| ITO | 2,0592 | 6,5 nm | 6,5 nm | 6,5 nm |
| $ZrO_2$ | 1,997 | 48 nm | 38 nm | 38 nm |
| $SiO_2$ | 1,47256 | 37 nm | 54 nm | 51 nm |
| $ZrO_2$ | 1,997 | 35 nm | 34 nm | 35 nm |
| $SiO_2$ | 1,47256 | 71 nm | 62 nm | 69 nm |
| $ZrO_2$ | 1,997 | 34 nm | 53 nm | 37 nm |
| $SiO_2$ | 1,47256 | 52 nm | 36 nm | 53 nm |
| $ZrO_2$ | 1,997 | 25 nm | 29 nm | 19 nm |
| $SiO_2$ sous couche | 1,4636 | 150 nm | 150 nm | 150,0 nm |
| Substrat |  | 2 mm | | |
| Performances |  |  |  |  |
| **C\*** |  | 9 | 9 | 9 |
| **h** |  | 145 | 135 | 135 |
| **Rv** |  | 0,70% | 0,88% | 0,85% |
| facteur moyens de réflexion **[280 nm – 380 nm]** |  | 65,4% | 67,7% | 69,5% |
| facteur moyens de réflexion **[350 nm – 380 nm]** |  | 43% | 62% | 57% |
| facteur moyens de réflexion **[350 nm – 400 nm]** |  | 35% | 53% | 48% |
| **Tuv\* [280 nm – 380 nm]** |  | 1,34% | 1,25% | 1,18% |

\* Tuv = Tuv(Orma nu)(1-Ruv) = 3,87%(1- Ruv)

*Tableau 4*

Les graphes de réflexion entre 280 et 780 nm de certains des articles préparés (lentille 1 et lentille 3) sont représentés sur les figures 1 et 2 pour un angle d'incidence de 0°.

4. Résultat

Il peut être observé que les lentilles ophtalmiques 1 à 3 possèdent de très bonnes propriétés antireflet dans le domaine visible (Rv < 0,88%), tout en diminuant la transmission dans les UV (Tuv < 1,34%) et en ayant un excellent facteur moyen de réflexion dans les UV : supérieur à 65% sur le domaine [280 nm - 380 nm]) et en particulier supérieur à 57% dans le domaine allant de 350 nm à 380 nm qui est le plus problématique pour le substrat Orma®.

Les lentilles obtenues selon les exemples 1 à 3 présentent en outre d'excellentes propriétés de transparence, une bonne résistance à l'abrasion et aux rayures, et une bonne résistance à un traitement au trempé dans l'eau chaude suivi d'une sollicitation mécanique de surface. L'adhérence des revêtements au substrat est également très satisfaisante.

5. Essai comparatifs

*Tableau 5*

| | Réflectance à 400nm | Rv | facteur moyens de réflexion [280nm-380nm] | facteur moyens de réflexion [350nm-380nm] | facteur moyens de réflexion [350nm-400nm] |
|---|---|---|---|---|---|
| **Ex 3 de US5332618** | 46.4 % | 0.40% | 57% | 86% | 81% |
| **Exemple 1** | 2.3 % | 0.70 % | 65.4 % | 43% | 35 % |
| **Exemple 2** | 14.5 % | 0.88 % | 67.7 % | 62 % | 53 % |
| **Exemple 3** | 12.5 % | 0.85 % | 69.5 % | 57% | 48 % |

Comme on peut l'observer, les lentilles ophtalmiques selon l'invention permettent d'obtenir une réflexion importante des rayons UV (ici, en incidence normale), notamment pour la gamme problématique de 350 à 380 nm (lentilles 2 et 3), tout en présentant une réflexion lumineuse faible à 400 nm.

6. Valeurs de ESPF de la lentille

Les lentilles obtenues selon les exemples 1 à 3 peuvent être revêtues en face arrière par un revêtement antireflet de Ruv entre 280 et 380 nm inférieur à 5% à un angle d'incidence de 35°. Avec le revêtement de l'exemple 1 du brevet FR2968774, les valeurs d'ESPF sont supérieures à 20 (tableau 6) :

*Tableau 6*

| | Tuv@0° sur ORMA (Tuv = 3,87%(1- Ruv)) | Ruv@35° face arrière | ESPF |
|---|---|---|---|
| Exemple 1 | 1.34% | 3% | 23 |
| Exemple 2 | 1.25% | 3% | 23.5 |
| Exemple 3 | 1.18% | 3% | 24 |

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

**Revendications**

1. Lentille ophtalmique transparente comprenant un substrat ayant une face principale avant et une face principale arrière, ladite face principale avant étant revêtue d'un revêtement interférentiel multicouche, de préférence antireflet, comprenant un empilement d'au moins une couche ayant un indice de réfraction supérieur à 1,6, dite couche à haut indice de réfraction, et d'au moins une couche ayant un indice de réfraction inférieur à 1,55, dite couche à bas indice de réfraction et ne contenant pas de titane, **caractérisée en ce que** :

   ∘ le facteur moyen de réflexion sur ladite face principale avant revêtue dudit revêtement interférentiel, entre 350 nm et une longueur d'onde comprise entre 380 et 400 nm, de préférence entre 350 et 380 nm, pondéré par la fonction $W(\lambda)$, est supérieur ou égal à 50 % pour au moins un angle d'incidence compris entre 0° et 17°;
   ∘ le facteur de réflexion lumineuse à 400 nm sur ladite face principale avant revêtue dudit revêtement interférentiel est inférieur ou égal à 35% pour au moins un angle d'incidence compris entre 0° et 17°,

dans laquelle le revêtement interférentiel comprend, dans le sens de l'éloignement du substrat,

- une couche de haut indice de réfraction ayant un indice de réfraction supérieur à 1,6 de 15 à 39 nm d'épaisseur,
- une couche de bas indice de réfraction ayant un indice de réfraction inférieur à 1,55 de 26 à 62 nm d'épaisseur,
- une couche de haut indice de réfraction ayant un indice de réfraction supérieur à 1,6 de 24 à 63 nm d'épaisseur,
- une couche de bas indice de réfraction ayant un indice de réfraction inférieur à 1,55 de 52 à 81 nm d'épaisseur,
- une couche de haut indice de réfraction ayant un indice de réfraction supérieur à 1,6 de 24 à 45 nm d'épaisseur,
- une couche de bas indice de réfraction ayant un indice de réfraction inférieur à 1,55 de 27 à 64 nm d'épaisseur,
- une couche de haut indice de réfraction ayant un indice de réfraction supérieur à 1,6 de 28 à 58 nm d'épaisseur,
- optionnellement une couche électriquement conductrice de 3 à 10 nm d'épaisseur, et
- une couche de bas indice de réfraction ayant un indice de réfraction inférieur à 1,55 de 84 à 116 nm d'épaisseur.

2. Lentille ophtalmique selon la revendication 1, dans laquelle ledit facteur moyen de réflexion sur ladite face principale avant entre 350 nm et une longueur d'onde comprise entre 380 et 400 nm est supérieur ou égal à 65% pour au moins un angle d'incidence compris entre 0° et 17°.

3. Lentille ophtalmique selon la revendication 1 ou la revendication 2, dans laquelle le facteur de réflexion lumineuse à 400 nm sur ladite face principale avant revêtue dudit revêtement interférentiel est inférieur ou égal à 25%, de préférence inférieur ou égal à 15% pour au moins un angle d'incidence compris entre 0° et 17°.

4. Lentille ophtalmique selon l'une quelconque des revendications précédentes, dans laquelle le ou les couches à haut indice de réfraction du revêtement interférentiel multicouche ont un indice de réfraction supérieur ou égal à 1,8, de préférence supérieur ou égal à 1,9.

5. Lentille ophtalmique selon l'une quelconque des revendications précédentes, dans laquelle la lumière réfléchie sur ladite face principale avant revêtue dudit revêtement interférentiel présente une chroma C* inférieure ou égale à 15, de préférence inférieure ou égale à 10 pour au moins un angle d'incidence compris entre 0° et 17°.

6. Lentille ophtalmique selon l'une quelconque des revendications précédentes, dans laquelle le substrat présente un facteur de transmission T supérieur ou égal à 1% pour une longueur d'onde située entre 350 nm et 400 nm.

7. Lentille ophtalmique selon l'une quelconque des revendications précédentes, dans laquelle le facteur de réflexion dans le visible Rv entre 380 nm et 780 nm sur ladite face principale avant revêtue dudit revêtement interférentiel est inférieur ou égal à 3%, de préférence inférieur ou égal à 1,5%.

8. Lentille ophtalmique selon l'une quelconque des revendications précédentes, **caractérisée en ce que** le revêtement interférentiel comprend, dans le sens de l'éloignement du substrat,

- une couche de haut indice de réfraction ayant un indice de réfraction supérieur à 1,6 de 15 à 35 nm d'épaisseur,
- une couche de bas indice de réfraction ayant un indice de réfraction inférieur à 1,55 de 42 à 62 nm d'épaisseur,
- une couche de haut indice de réfraction ayant un indice de réfraction supérieur à 1,6 de 24 à 44 nm d'épaisseur,
- une couche de bas indice de réfraction ayant un indice de réfraction inférieur à 1,55 de 61 à 81 nm d'épaisseur,
- une couche de haut indice de réfraction ayant un indice de réfraction supérieur à 1,6 de 25 à 45 nm d'épaisseur,
- une couche de bas indice de réfraction ayant un indice de réfraction inférieur à 1,55 de 27 à 57 nm d'épaisseur,
- une couche de haut indice de réfraction ayant un indice de réfraction supérieur à 1,6 de 30 à 58 nm d'épaisseur,
- optionnellement une couche électriquement conductrice de 3 à 10nm d'épaisseur, et
- une couche de bas indice de réfraction ayant un indice de réfraction inférieur à 1,55 de 84 à 114 nm d'épaisseur.

9. Lentille ophtalmique selon l'une quelconque des revendications précédentes, **caractérisée en ce que** le revêtement interférentiel comprend, dans le sens de l'éloignement du substrat,

- une couche de haut indice de réfraction ayant un indice de réfraction supérieur à 1,6 de 19 à 39 nm d'épaisseur,
- une couche de bas indice de réfraction ayant un indice de réfraction inférieur à 1,55 de 26 à 46 nm d'épaisseur,
- une couche de haut indice de réfraction ayant un indice de réfraction supérieur à 1,6 de 43 à 63 nm d'épaisseur,
- une couche de bas indice de réfraction ayant un indice de réfraction inférieur à 1,55 de 52 à 72 nm d'épaisseur,
- une couche de haut indice de réfraction ayant un indice de réfraction supérieur à 1,6 de 24 à 44 nm d'épaisseur,
- une couche de bas indice de réfraction ayant un indice de réfraction inférieur à 1,55 de 44 à 64 nm d'épaisseur,
- une couche de haut indice de réfraction ayant un indice de réfraction supérieur à 1,6 de 28 à 48 nm d'épaisseur,
- optionnellement une couche électriquement conductrice de 3 à 10 nm d'épaisseur, et
- une couche de bas indice de réfraction ayant un indice de réfraction inférieur à 1,55 de 95 à 116 nm d'épaisseur.

**10.** Lentille ophtalmique selon l'une quelconque des revendications précédentes, dans laquelle le facteur de réflexion dans l'UV $R_{uv}$ sur ladite face principale arrière entre 280 nm et 380 nm pondéré par la fonction W($\lambda$) est inférieur ou égal à 10%, de préférence inférieur ou égal à 5%, idéalement inférieur ou égal à 3%, pour un angle d'incidence de 35°.

**11.** Lentille ophtalmique selon l'une quelconque des revendications précédentes, dans laquelle le coefficient ESPF de la lentille est supérieur à 10, de préférence supérieur à 15, idéalement supérieur à 20.

**12.** Procédé de fabrication d'une lentille ophtalmique selon l'une quelconque des revendications précédentes, **caractérisé en ce que** le dépôt du revêtement interférentiel multicouche est réalisé sous vide.


**Patentansprüche**

**1.** Transparente ophthalmische Linse, die ein Substrat enthält, das eine vordere Hauptseite und eine hintere Hauptseite hat, wobei die vordere Hauptseite mit einer Mehrschicht-Interferenzbeschichtung beschichtet ist, vorzugsweise Antireflex, die eine Stapelung mindestens einer Schicht mit einem Brechungsindex von mehr als 1,6, Schicht mit hohem Brechungsindex genannt, und mindestens einer Schicht mit einem Brechungsindex von weniger als 1,55, Schicht mit niedrigem Brechungsindex genannt und kein Titan enthaltend aufweist, **dadurch gekennzeichnet, dass**:

◦ der mittlere Reflexionsfaktor auf der mit der Interferenzbeschichtung beschichteten vorderen Hauptseite, zwischen 350 nm und einer Wellenlänge zwischen 380 und 400 nm, vorzugsweise zwischen 350 und 380 nm, gewichtet mit der Funktion W($\lambda$), für mindestens einen Einfallswinkel zwischen 0° und 17° größer als oder gleich 50% ist;
◦ der Lichtreflexionsfaktor bei 400 nm auf der mit der Interferenzbeschichtung beschichteten vorderen Hauptseite für mindestens einen Einfallswinkel zwischen 0° und 17° niedriger als oder gleich 35% ist,
wobei die Interferenzbeschichtung in Richtung der Entfernung vom Substrat enthält

- eine Schicht mit hohem Brechungsindex, die einen Brechungsindex höher als 1,6 hat, mit einer Dicke von 15 bis 39 nm,
- eine Schicht mit niedrigem Brechungsindex, die einen Brechungsindex niedriger als 1,55 hat, mit einer Dicke von 26 bis 62 nm,
- eine Schicht mit hohem Brechungsindex, die einen Brechungsindex höher als 1,6 hat, mit einer Dicke von 24 bis 63 nm,
- eine Schicht mit niedrigem Brechungsindex, die einen Brechungsindex niedriger als 1,55 hat, mit einer Dicke von 52 bis 81 nm,
- eine Schicht mit hohem Brechungsindex, die einen Brechungsindex höher als 1,6 hat, mit einer Dicke von 24 bis 45 nm,
- eine Schicht mit niedrigem Brechungsindex, die einen Brechungsindex niedriger als 1,55 hat, mit einer Dicke von 27 bis 64 nm,
- eine Schicht mit hohem Brechungsindex, die einen Brechungsindex höher als 1,6 hat, mit einer Dicke von 28 bis 58 nm,
- optional eine elektrisch leitende Schicht einer Dicke von 3 bis 10 nm, und
- eine Schicht mit niedrigem Brechungsindex, die einen Brechungsindex niedriger als 1,55 hat, mit einer Dicke von 84 bis 116 nm.

**2.** Ophthalmische Linse nach Anspruch 1, wobei der mittlere Reflexionsfaktor auf der vorderen Hauptseite zwischen 350 nm und einer Wellenlänge zwischen 380 und 400 nm für mindestens einen Einfallswinkel zwischen 0° und 17° höher als oder gleich 65% ist.

3. Ophthalmische Linse nach Anspruch 1 oder Anspruch 2, wobei der Lichtreflexionsfaktor bei 400 nm auf der mit der Interferenzbeschichtung beschichteten vorderen Hauptseite für mindestens einen Einfallswinkel zwischen 0° und 17° niedriger als oder gleich 25%, vorzugsweise niedriger als oder gleich 15% ist.

4. Ophthalmische Linse nach einem der vorhergehenden Ansprüche, wobei die Schicht oder die Schichten mit hohem Brechungsindex der Mehrschicht-Interferenzbeschichtung einen Brechungsindex höher als oder gleich 1,8 hat/haben, vorzugsweise höher als oder gleich 1,9.

5. Ophthalmische Linse nach einem der vorhergehenden Ansprüche, wobei das auf der mit der Interferenzbeschichtung beschichteten vorderen Hauptseite reflektierte Licht für mindestens einen Einfallswinkel zwischen 0° und 17° ein Chroma C* niedriger als oder gleich 15, vorzugsweise niedriger als oder gleich 10 aufweist.

6. Ophthalmische Linse nach einem der vorhergehenden Ansprüche, wobei das Substrat einen Übertragungsfaktor T höher als oder gleich 1% für eine Wellenlänge aufweist, die sich zwischen 350 m und 400 nm befindet.

7. Ophthalmische Linse nach einem der vorhergehenden Ansprüche, wobei der Reflexionsfaktor im sichtbaren Licht Rv zwischen 380 nm und 780 nm auf der mit der Interferenzbeschichtung beschichteten vorderen Hauptseite niedriger als oder gleich 3%, vorzugsweise niedriger als oder gleich 1,5% ist.

8. Ophthalmische Linse nach einem der vorhergehenden Ansprüche, **dadurch gekennzeichnet, dass** die Interferenzbeschichtung in Richtung der Entfernung vom Substrat enthält

   - eine Schicht mit hohem Brechungsindex, die einen Brechungsindex höher als 1,6 hat, mit einer Dicke von 15 bis 35 nm,
   - eine Schicht mit niedrigem Brechungsindex, die einen Brechungsindex niedriger als 1,55 hat, mit einer Dicke von 42 bis 62 nm,
   - eine Schicht mit hohem Brechungsindex, die einen Brechungsindex höher als 1,6 hat, mit einer Dicke von 24 bis 44 nm,
   - eine Schicht mit niedrigem Brechungsindex, die einen Brechungsindex niedriger als 1,55 hat, mit einer Dicke von 61 bis 81 nm,
   - eine Schicht mit hohem Brechungsindex, die einen Brechungsindex höher als 1,6 hat, mit einer Dicke von 25 bis 45 nm,
   - eine Schicht mit niedrigem Brechungsindex, die einen Brechungsindex niedriger als 1,55 hat, mit einer Dicke von 27 bis 57 nm,
   - eine Schicht mit hohem Brechungsindex, die einen Brechungsindex höher als 1,6 hat, mit einer Dicke von 30 bis 58 nm,
   - optional eine elektrisch leitende Schicht von 3 bis 10 nm Dicke, und
   - eine Schicht mit niedrigem Brechungsindex, die einen Brechungsindex niedriger als 1,55 hat, mit einer Dicke von 84 bis 114 nm.

9. Ophthalmische Linse nach einem der vorhergehenden Ansprüche, **dadurch gekennzeichnet, dass** die Interferenzbeschichtung in Richtung der Entfernung vom Substrat enthält

   - eine Schicht mit hohem Brechungsindex, die einen Brechungsindex höher als 1,6 hat, mit einer Dicke von 19 bis 39 nm,
   - eine Schicht mit niedrigem Brechungsindex, die einen Brechungsindex niedriger als 1,55 hat, mit einer Dicke von 26 bis 46 nm,
   - eine Schicht mit hohem Brechungsindex, die einen Brechungsindex höher als 1,6 hat, mit einer Dicke von 43 bis 63 nm,
   - eine Schicht mit niedrigem Brechungsindex, die einen Brechungsindex niedriger als 1,55 hat, mit einer Dicke von 52 bis 72 nm,
   - eine Schicht mit hohem Brechungsindex, die einen Brechungsindex höher als 1,6 hat, mit einer Dicke von 24 bis 44 nm,
   - eine Schicht mit niedrigem Brechungsindex, die einen Brechungsindex niedriger als 1,55 hat, mit einer Dicke von 44 bis 64 nm,
   - eine Schicht mit hohem Brechungsindex, die einen Brechungsindex höher als 1,6 hat, mit einer Dicke von 28 bis 48 nm,
- optional eine elektrisch leitende Schicht von 3 bis 10 nm Dicke, und
- eine Schicht mit niedrigem Brechungsindex, die einen Brechungsindex niedriger als 1,55 hat, mit einer Dicke von 95 bis 116 nm.

10. Ophthalmische Linse nach einem der vorhergehenden Ansprüche, wobei der Reflexionsfaktor im UV-Bereich $R_{uv}$ auf der hinteren Hauptseite zwischen 280 nm und 380 nm gewichtet mit der Funktion $W(\lambda)$ für einen Einfallswinkel von 35° niedriger als oder gleich 10%, vorzugsweise niedriger als oder gleich 5%, idealerweise niedriger als oder gleich 3% ist.

11. Ophthalmische Linse nach einem der vorhergehenden Ansprüche, wobei der ESPF-Koeffizient der Linse höher ist als 10, vorzugsweise höher als 15, idealerweise höher als 20.

12. Herstellungsverfahren einer ophthalmischen Linse nach einem der vorhergehenden Ansprüche, **dadurch gekennzeichnet, dass** das Aufbringen der Mehrschicht-Interferenzbeschichtung unter Vakuum erfolgt.

**Claims**

1. A transparent ophthalmic lens comprising a substrate having a front main face and a back main face, said front main face being coated with a, preferably antireflection, multilayer interference coating comprising a stack of at least one layer having a refractive index higher than 1.6, called the high-refractive-index layer, and of at least one layer having a refractive index lower than 1.55, called the low-refractive-index layer, and not containing titanium, **characterized in that**:

   ◦ the average reflectance of said coated front main face of said interference coating, between 350 nm and a wavelength comprised between 380 and 400 nm and preferably between 350 and 380 nm, weighted by the function W(A), is higher than or equal to 50% at at least one angle of incidence comprised between 0° and 17°; and
   ◦ the light reflectance at 400 nm of said coated front main face of said interference coating is lower than or equal to 35% at at least one angle of incidence comprised between 0° and 17°, and

   wherein the interference coating comprises, in order starting from the substrate:

   - a high-refractive-index layer having a refractive index higher than 1.6 of 15 to 39 nm thickness,
   - a low-refractive-index layer having a refractive index lower than 1.55 of 26 to 62 nm thickness,
   - a high-refractive-index layer having a refractive index higher than 1.6 of 24 to 63 nm thickness,
   - a low-refractive-index layer having a refractive index lower than 1.55 of 52 to 81 nm thickness,
   - a high-refractive-index layer having a refractive index higher than 1.6 of 24 to 45 nm thickness,
   - a low-refractive-index layer having a refractive index lower than 1.55 of 27 to 64 nm thickness,
   - a high-refractive-index layer having a refractive index higher than 1.6 of 28 to 58 nm thickness,
   - optionally an electrically conductive layer of 3 to 10 nm thickness, and
   - a low-refractive-index layer having a refractive index lower than 1.55 of 84 to 116 nm thickness.

2. The ophthalmic lens as claimed in claim 1, wherein said average reflectance of said front main face between 350 nm and a wavelength comprised between 380 and 400 nm is higher than or equal to 65% at at least one angle of incidence comprised between 0° and 17°.

3. The ophthalmic lens as claimed in claim 1 or claim 2, wherein the light reflectance at 400 nm of said coated front main face of said interference coating is lower than or equal to 25% and preferably lower than or equal to 15% at at least one angle of incidence comprised between 0° and 17°.

4. The ophthalmic lens as claimed in any one of the preceding claims, wherein the one or more high-refractive-index layers of the multilayer interference coating have a refractive index higher than or equal to 1.8 and preferably higher than or equal to 1.9.

5. The ophthalmic lens as claimed in any one of the preceding claims, wherein the light reflected from said coated front main face of said interference coating has a chroma C* lower than or equal to 15 and preferably lower than or equal to 10 at at least one angle of incidence comprised between 0° and 17°.

6.  The ophthalmic lens as claimed in any one of the preceding claims, wherein the substrate has a transmittance T higher than or equal to 1% at a wavelength located between 350 nm and 400 nm.

7.  The ophthalmic lens as claimed in any one of the preceding claims, wherein the reflectance in the visible Rv between 380 nm and 780 nm of said coated front main face of said interference coating is lower than or equal to 3% and preferably lower than or equal to 1.5%.

8.  The ophthalmic lens as claimed in any one of the preceding claims, **characterized in that** the interference coating comprises, in order starting from the substrate:

    - a high-refractive-index layer having a refractive index higher than 1.6 of 15 to 35 nm thickness,
    - a low-refractive-index layer having a refractive index lower than 1.55 of 42 to 62 nm thickness,
    - a high-refractive-index layer having a refractive index higher than 1.6 of 24 to 44 nm thickness,
    - a low-refractive-index layer having a refractive index lower than 1.55 of 61 to 81 nm thickness,
    - a high-refractive-index layer having a refractive index higher than 1.6 of 25 to 45 nm thickness,
    - a low-refractive-index layer having a refractive index lower than 1.55 of 27 to 57 nm thickness,
    - a high-refractive-index layer having a refractive index higher than 1.6 of 30 to 58 nm thickness,
    - optionally an electrically conductive layer of 3 to 10 nm thickness, and
    - a low-refractive-index layer having a refractive index lower than 1.55 of 84 to 114 nm thickness.

9.  The ophthalmic lens as claimed in any one of the preceding claims, **characterized in that** the interference coating comprises, in order starting from the substrate:

    - a high-refractive-index layer having a refractive index higher than 1.6 of 19 to 39 nm thickness,
    - a low-refractive-index layer having a refractive index lower than 1.55 of 26 to 46 nm thickness,
    - a high-refractive-index layer having a refractive index higher than 1.6 of 43 to 63 nm thickness,
    - a low-refractive-index layer having a refractive index lower than 1.55 of 52 to 72 nm thickness,
    - a high-refractive-index layer having a refractive index higher than 1.6 of 24 to 44 nm thickness,
    - a low-refractive-index layer having a refractive index lower than 1.55 of 44 to 64 nm thickness,
    - a high-refractive-index layer having a refractive index higher than 1.6 of 28 to 48 nm thickness,
    - optionally an electrically conductive layer of 3 to 10 nm thickness, and
    - a low-refractive-index layer having a refractive index lower than 1.55 of 95 to 116 nm thickness.

10. The ophthalmic lens as claimed in any one of the preceding claims, wherein the reflectance in the UV $R_{uv}$ of said back main face between 280 nm and 380 nm, weighted by the function $W(\lambda)$, is lower than or equal to 10%, preferably lower than or equal to 5% and ideally lower than or equal to 3%, at an angle of incidence of 35°.

11. The ophthalmic lens as claimed in any one of the preceding claims, wherein the ESPF coefficient of the lens is higher than 10, preferably higher than 15 and ideally higher than 20.

12. A process for manufacturing an ophthalmic lens as claimed in any one of the preceding claims, **characterized in that** the multilayer interference coating is vacuum deposited.

Fig.1

Fig.2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2607884 A
- FR 2968774
- EP 1085348 A
- JP 1230003 A
- US 5332618 A
- FR 2702486
- EP 0614957 A
- US 4211823 A
- US 5015523 A
- JP 63141001 A
- JP 63087223 A

- EP 0404111 A
- US 5316791 A
- EP 0680492 A
- US 5081192 A
- US 5763061 A
- US 6183872 A
- US 5739639 A
- US 5922787 A
- US 6337235 B
- US 6277485 B
- EP 0933377 A

**Littérature non-brevet citée dans la description**

- Thin Film Processes. Thin Film Processes. Academic Press, 1978, vol. II